# EUROPÄISCHE PATENTANMELDUNG

(11) **EP 4 644 684 A1**
(43) Veröffentlichungstag der Anmeldung: **05.11.2025**
(21) Anmeldenummer: 25174130.2
(22) Anmeldetag: 03.05.2025
(51) Int. Cl.: F02C 9/28

(54) **VERFAHREN UND SYSTEM ZUR OPTIMIERUNG DES BETRIEBSVERHALTENS EINER GASTURBINENANLAGE**

(30) Priorität: 03.05.2024 DE 102024112569
(71) Anmelder: Burkhardt, Daniel, 47918 Tönisvorst (DE)
(72) Erfinder: Burkhardt, Daniel, 47918 Tönisvorst (DE)
(74) Vertreter: Dammertz, Ulrich

(57) **Zusammenfassung**

Die Erfindung betrifft ein computerimplementiertes Verfahren und ein solches System (100) zur Optimierung des Betriebsverhaltens einer stationären Gasturbinenanlage (10). Hierbei weist das Verfahren folgende Schritte auf:
(i) Aufnehmen von Betriebsdaten einer Gasturbine (11), währenddessen die Gasturbine (11) sich im Betrieb befindet, und Erfassen von Umgebungsdaten aus einer Umgebung, in der die Gasturbine (11) angeordnet ist,
(ii) Speicherung zumindest einer Teilmenge der Betriebs- und Umgebungsdaten, die in Schritt (i) als aufgenommen bzw. erfasst worden sind, in einer Datenbank (14),
(iii) Bereitstellung von historischen Betriebsdaten der Gasturbine (11), die in der Datenbank (14) gespeichert sind und/oder aus einem externen Speicher ausgelesen werden, wobei diese historischen Betriebsdaten jedwede früheren Betriebszustände der Gasturbine (11) repräsentieren, und
(iv) Simulation für einen optimierten Betriebspunkt der Gasturbine (11) mittels einer automatisierten Durchführung eines Optimierungsalgorithmus (OA) unter Berücksichtigung der in Schritt (ii) gespeicherten Betriebs- und Umgebungsdaten der Gasturbine (11) und deren historischen Betriebsdaten von Schritt (iii), wobei zumindest ein regelbarer Betriebsparameter der Gasturbine (11) verändert wird, derart, dass dabei zumindest eine vorbestimmte Bedingung in Bezug auf den Betrieb der Gasturbine (11) eingehalten wird.

## Beschreibung

Die Erfindung betrifft ein computerimplementiertes Verfahren und ein solches System zur Optimierung des Betriebsverhaltens einer Gasturbinenanlage, und ein hierzu korrespondierendes Computerprogrammprodukt.

Im Allgemeinen zeichnen sich Gasturbinen durch eine gewisse Anfälligkeit gegenüber sich ändernden Randbedingen aus. So können zum Beispiel sich ändernde Umgebungstemperaturen (Sommer/Winter), Änderungen der Gasqualitäten, Änderungen der Umgebungsluftfeuchte einen deutlichen Einfluss auf das Betriebsverhalten der Gasturbinen ausüben. Die Auswirkungen zumindest dieser Einflüsse (und ggf. noch weitere) können sich nachteilig beispielsweise in erhöhten Brennkammerbeschleunigungen (potenzielle Maschinenschäden), aber auch in erhöhten Schadstoffemissionen, sowie Abweichungen von vertraglichen Leistungsgarantien niederschlagen.

Die vorstehend genannten Randbedingungen, denen eine Gasturbine im Betrieb ausgesetzt ist, stellen externe und unkontrollierbare Faktoren dar, die sich während des Betriebs einer Gasturbine ständig ändern und somit einen erheblichen Einfluss auf die Qualität des Gasturbinenbetriebs haben. Dies führt in vielen Fällen zu zum Teil erheblichen Abweichungen in der Betriebsqualität, wie z.B. Leistungsminderung, Verbrennungsstörungen, die im schlimmsten Fall zu Betriebsstörungen, aber auch zu erhöhten Schadstoffemissionen über die behördlich zulässigen Höchstgrenzen hinaus führen können.

Aus EP 3 108 132 B1 ist es bekannt, das Einstellen einer Gasturbinenanlage mittels einer Veränderung des Treibstoffmenge vorzunehmen. Im Einzelnen kann hierbei eine Treibstoffmenge als Stellgröße dienen, um die korrigierte Abgastemperatur einer Gasturbinenanlage gezielt zu verändern. Eine solche Veränderung der Treibstoffmenge, bei der es sich mit der Erfahrung eines Fachmanns um die Menge an "Pilot Gas" handeln kann, wird in der Regel zur Kompensation von klimatischen Veränderungen vorgenommen.

EP 1 880 141 B1 offenbart ein Verfahren und eine Vorrichtung zur Regelung der Fahrlinie einer Gasturbinenbrennkammer, wobei Flammeninstabilitäten vermieden werden sollen. Statt die Pilotgasmenge anhand von bekannten Störgrößen zu steuern, wird direkt die Annäherung an eine Stabilitätsgrenze (Brummgrenze) überwacht, etwa über Änderungen im Wechseldruck am Brennerflansch oder in der Brennkammer. Bei einer drohenden Instabilität der Gasturbine wird die Pilotgasmenge gezielt verändert, um die Flammenstabilität aufrechtzuerhalten. Neben der Pilotgasmengenanpassung können auch Hauptbrennstoff- und Luftmassenströme zur Feinjustierung der Emissionen (z.B. NOx oder CO) beeinflusst werden. Jedoch verfolgt das Verfahren gemäß EP 1 880 141 B1 ein Regelungskonzept für den Betrieb einer Gasturbine ohne genaue Kenntnis aller Störgrößeneinflüsse.

Des Weiteren ist es nach dem Stand der Technik ist es bekannt, dass der Betrieb einer Gasturbine von Fachpersonal überwacht und - bei Bedarf - von diesem Fachpersonal auch manuell eingestellt bzw. angepasst wird. In solchen Fällen werden Gasturbinen vom Fachpersonal optimiert und durch sog. "Tuningmaßnahmen" neu eingestellt. Jedoch unterliegt ein solcher Ansatz dem Nachteil, dass auch für ein solches Fachpersonal die Möglichkeiten zur Bewertung der vorstehend genannten verschiedenen externen Einflussfaktoren begrenzt sind. Hinzu tritt, dass die Optimierung des Gasturbinenbetriebs (Tuning), die zu einem bestimmten Zeitpunkt vorgenommen wird, bereits nach einiger Zeit, beispielsweise in Abhängigkeit von klimatischen Schwankungen, dann wieder hinfällig geworden ist, und es sodann einer erneuten Tuningmaßnahme bedarf. Allein die Planung und Durchführung von solchen erforderlichen Tuningmaßnahmen bindet auf Seiten des Gasturbinenbetreibers Ressourcen, Zeit und Geld.

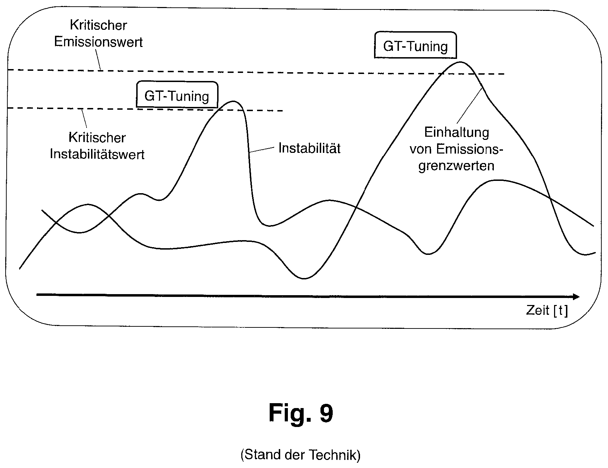

Im Diagramm von Fig. 9 sind die Kurvenverläufe für die Instabilität und für die Einhaltung von Emissions-Grenzwerten gezeigt, die sich bei einem herkömmlichen Tuning von Gasturbinen ("*GT-Tuning"*) nach dem Stand der Technik bilden. Aus der Fig. 9 ist ersichtlich, dass es bei einem solchen herkömmlichen GT-Tuning zu einem Nicht-Einhalten eines kritischen Instabilitätswertes und/oder eines kritischen Emissionswertes kommt, indem die zugehörigen Kurvenverläufe die besagten kritischen Grenzwerte überschreiten.

Der Erfindung liegt die Aufgabe zugrunde, eine Optimierung des Betriebsverhaltens einer Gasturbinenanlage in vollautomatischer Weise zu verbessern.

Die obige Aufgabe wird durch ein computerimplementiertes Verfahren mit den Merkmalen von Anspruch 1 und durch ein entsprechendes System mit den Merkmalen von Anspruch 15 gelöst. Vorteilhafte Weiterbildungen der Erfindung sind in den abhängigen Ansprüchen definiert.

Die vorliegende Erfindung richtet sich auf ein Verfahren zur Optimierung des Betriebsverhaltens einer Gasturbinenanlage. Die Erfindung verbindet hierbei den technischen Stand des KI-basierten maschinellen Lernens mit den praktischen Erfahrungen der verbrennungstechnischen Optimierung von Gasturbinen.

Die vorliegende Erfindung betrifft ein computerimplementiertes Verfahren zur Optimierung des Betriebsverhaltens einer stationären Gasturbinenanlage, wobei dieses Verfahren folgende Schritte aufweist:
(i) Aufnehmen von Betriebsdaten einer Gasturbine, währenddessen die Gasturbine sich im Betrieb befindet, und Erfassen von Umgebungsdaten aus einer Umgebung, in der die Gasturbine angeordnet ist,
(ii) Speicherung von zumindest einer Teilmenge der Betriebs- und Umgebungsdaten, die in Schritt (i) aufgenommen bzw. erfasst worden sind, in einer Datenbank,
(iii) Bereitstellung von historischen Betriebsdaten der Gasturbine, die in der Datenbank gespeichert sind und/oder aus einem externen Speicher ausgelesen werden, wobei diese historischen Betriebsdaten jedwede früheren Betriebszustände der Gasturbine repräsentieren, und
(iv) Simulation für einen optimierten Betriebspunkt der Gasturbine mittels einer automatisierten Durchführung eines Optimierungsalgorithmus unter Berücksichtigung der in Schritt (ii) gespeicherten Betriebs- und Umgebungsdaten der Gasturbine und deren historischen Betriebsdaten von Schritt (iii), wobei zumindest ein regelbarer Betriebsparameter der Gasturbine verändert wird, derart, dass dabei zumindest eine vorbestimmte Bedingung in Bezug auf den Betrieb der Gasturbine eingehalten wird.

Zur Durchführung des vorstehend genannten erfindungsgemäßen computerimplementierten Verfahrens ist es zweckmäßig, dass der zumindest eine Betriebsparameter der Gasturbine ausgewählt ist aus der Gruppe umfassend eine Menge von zugeführtem Pilot Gas, eine Menge von zugeführtem Vormischgas, eine Temperatur des zugeführten Gases (Pilot Gas und/oder Vormischgas) und/oder einen Druck des zugeführten Gases (Pilot Gas und/oder Vormischgas).

Die vorliegende Erfindung betrifft des Weiteren ein Computerprogrammprodukt, das auf einem computerlesbaren Medium gespeichert ist und Instruktionen umfasst, die, wenn sie von einem Computer ausgeführt werden, ein Verfahren nach einem der Ansprüche 1 bis 13 ausführen, wobei das Verfahren eine technische Wirkung in Form eines optimierten Betriebsverhaltens der stationären Gasturbinenanlage bewirkt.

Des Weiteren betrifft die vorliegende Erfindung auch einen computerlesbaren Datenspeicher, auf dem das vorstehend genannte Computerprogrammprodukt gespeichert ist.

Die vorliegende Erfindung betrifft des Weiteren ein computerimplementiertes System zur Optimierung des Betriebsverhaltens einer stationären Gasturbinenanlage, umfassend eine Verarbeitungseinheit, die programmtechnisch eingerichtet ist zur Ausführung eines Verfahrens nach einem der Ansprüche 1 bis 13, und einen Speicher, der Instruktionen enthält, welche die Verarbeitungseinheit veranlassen, das Verfahren nach einem der Ansprüche 1 bis 13 auszuführen.

Im Zusammenhang mit der Durchführung des erfindungsgemäßen Verfahrens wird an dieser Stelle gesondert darauf hingewiesen, dass die Betriebsdaten der Gasturbine reguläre Standardbetriebsdaten insbesondere in Form von Leistung, Temperaturen und Drücke, als auch Verbrennungsdaten insbesondere in Form von Frequenzen, Wechseldrücke und Beschleunigungen enthalten.

Gemäß einer vorteilhaften Weiterbildung des erfindungsgemäßen Verfahrens können bei der Simulation gemäß Schritt (iv) für einen optimierten Betriebspunkt der Gasturbine auch deren maschinenspezifische Reaktionen berücksichtigt werden, zu denen Folgende gehören:
- Brennkammerbeschleunigungen,
- Wechseldruckamplituden ("Humming" oder "Pulsation"), und/oder
- NOx und CO2 Emissionen.

Mittels der vorliegenden Erfindung ist es möglich, auf Grundlage der Berechnung eines geänderten Betriebspunktes und auch unter Berücksichtigung von klimatischen Bedingungen, die in der Umgebung einer solchen Gasturbinenanlage aktuell und ggf. auch zukünftig vorherrschen, eine Prognose für das resultierende Betriebsverhalten einer Gasturbinenanlage zu erstellen. Hierbei werden auch die Maschinenreaktionsdaten der Gasturbine, die sich in Wechselwirkung mit dem geänderten Betriebspunkt ergeben, geeignet berücksichtigt.

Gemäß einer vorteilhaften Weiterbildung des erfindungsgemäßen Verfahrens können die in Schritt (i) aufgenommenen und erfassten Betriebs- und Umgebungsdaten vor der Speicherung in der Datenbank gemäß Schritt (ii) zunächst an eine mit der Gasturbine in Signalverbindung stehende Auswerteeinheit übertragen werden, in der eine Plausibilitätsprüfung dieser Daten durchgeführt wird, wobei im Rahmen von Schritt (ii) dann nur solche Daten in der Datenbank gespeichert werden, die als plausibel und verwertbar eingestuft worden sind. Mit einer solchen Plausibilitätsprüfung wird erfindungsgemäß der Vorteil erreicht, dass nur verwertbare Daten in der Datenbank für eine spätere Analyse und Verarbeitung gespeichert werden und diese Datenbank mit den anderen Daten, die als nicht verwertbar erkannt worden sind, nicht überfrachtet wird.

Im Einzelnen werden weitere relevante Aspekte der vorliegenden Erfindung durch folgende Merkmale gebildet:
- Die Erfindung umfasst eine intelligente Leistungssoftware mit Hilfe von maschinenbasierten Lernanwendungen für Gasturbinen. Und/oder:
- Die Erfindung lernt kontinuierlich während des Betriebs einer Gasturbinenanlage. Hierbei analysiert ein speziell entwickelter KI-Algorithmus in Form des Optimierungsalgorithmus komplexe Einflussfaktoren und erstellt ein vollständiges Bild vom Betriebsverhalten der Gasturbine. In dieser Weise können wichtige Leistungs-größen wie Emissionen, Wirkungsgrad oder elektrische Leistung einer Gasturbine, bei der die vorliegende Erfindung zum Einsatz gelangt, optimiert werden. Und/oder:
- Die Erfindung basiert auf der permanenten Nutzung und Analyse auch der historischen Betriebsdaten einer Gasturbine. Im Laufe der Zeit entsteht so ein immer größerer Datenpool, der zu immer umfassenderen und vollständigeren Betriebserfahrungen führt und damit ein immer genaueres Bild der optimierten Gasturbine zeichnet. Und/oder:
- Erfindungsgemäß werden die Betriebsdaten einer Gasturbine in der Datenbank verdichtet, gesammelt und gefiltert. In dieser Weise wird sichergestellt, dass nur aussagekräftige, d.h. verwertbare und plausible Datensätze für den Lernprozess der Erfindung verwendet werden. Demgegenüber werden nicht verwertbare Daten ignoriert und gelöscht. Und/oder:
- Durch den Einsatz eines speziell entwickelten KI-Algorithmus ist eine kontinuierliche Optimierung einer Gasturbine möglich. Hierbei ist auch von Vorteil, dass eine solche Optimierung vom Betreiber einer Gasturbine selbstständig durchgeführt werden kann, nämlich durch den Einsatz des erfindungsgemäßen computerimplementierten Systems. Somit ist es dank der Erfindung möglich, den Betrieb einer Gasturbine an sich verändernde externe Einflussfaktoren vollautomatisch anzupassen, ohne dass hierbei ein manueller Eingriff von kostspieligem Fachpersonal notwendig ist. Und/oder:
- Erfindungsgemäß werden alle vorhandenen äußeren Randbedingungen, die einen Einfluss auf das Maschinenverhalten einer Gasturbine haben, vorzugsweise mit Hilfe eines KI-Algorithmus erfasst und anschließend geeignet analysiert, um daraus die richtigen technischen Schlüsse bzw. Maßnahmen für eine Optimierung des Betriebsverhalten der Gasturbine zu ziehen. Dies erfolgt erfindungsgemäß vorzugsweise vollautomatisch, auch auf Grundlage des Optimierungsalgorithmus, der auf einem Modell für maschinellem Lernen basiert. Und/oder:
- Im Zusammenhang mit der vorliegenden Erfindung umfasst das Verfahren des maschinellen Lernens eine Technik, die ausgewählt ist aus der Gruppe bestehend aus künstlichen neuronalen Netzen, Entscheidungsbäumen, regelbasierten Lernsystemen, selbstlernenden Algorithmen, statistischen Modellen und/oder adaptiven Modellen.
- Erfindungsgemäß können alle relevanten Grenzwerte für die Überwachung der Stabilität einer Gasturbine vorgegeben werden. Das bedeutet, dass dann alle von der Erfindung berechneten Betriebsszenarien innerhalb des sicheren Betriebsbereichs der Gasturbine liegen. Mittels der Erfindung wird das gemessene verbrennungsbedingte Betriebsverhalten der Gasturbine kontinuierlich mit den tatsächlichen Randbedingungen verglichen. Und/oder:
- Erfindungsgemäß werden neben aktuellen Betriebsdaten einer Gasturbine auch deren historische Betriebsdaten bestmöglich ausgeschöpft bzw. berücksichtigt, um damit eine Optimierung des Betriebsverhaltens der Gasturbine zu erreichen. In diesem Zusammenhang wird gesondert darauf hingewiesen, dass grundsätzlich jeder Datenpunkt von gesammelten Betriebsdaten einer Gasturbine Information enthält und somit von Bedeutung für die erfindungsgemäße Optimierung des Betriebsverhaltens einer Gasturbine sein kann. Und/oder:
- Erfindungsgemäß ist es möglich, neben der Optimierung des aktuellen Betriebszustandes einer Gasturbine auch eine Planung und Bewertung von zukünftigen Betriebsszenarien vorzunehmen. Hierbei können auch Wettervorhersagen berücksichtigt werden, was nachfolgend noch gesondert erläutert wird. Und/oder:
- Die Erfindung bietet eine übersichtliche und strukturierte Benutzeroberfläche (GUI), die es dem Anwender ermöglicht, sich schnellstmöglich in das Produkt einzuarbeiten und zur Vorbereitung und Durchführung des erfindungsgemäßen Verfahrens verschiedene Einstellungen anpassen zu können. Und/oder:
- Das erfindungsgemäße System umfasst in Bezug auf die vorstehend genannte Benutzeroberfläche einen Benutzerbereich und einen sogenannten Adminbereich. Hierbei ist der Benutzerbereich dahingehend ausgebildet, dass hierin alle vorhandenen Randbedingungen (steuerbar und nicht steuerbar), sowie der aktuelle Betriebspunkt der Gasturbine und die aktuell zugehörigen Maschinenreaktionen (Beschleunigungen, Emissionen, sonstige Verbrennungsmessgrößen) aufgelistet sind. Demgegenüber ist der Admin-Bereich dahingehend ausgebildet, dass ein Benutzer bzw. Betreiber einer Gasturbine verschiedene Betriebsszenarien (z.B. Einstellung von Grenzwerten) definieren kann, die seinen aktuellen Interessen bzw. Verpflichtungen entsprechen. Und/oder:
- Der vorstehend genannte Benutzerbereich enthält die beiden Hauptfunktionen der Erfindung, nämlich das Berechnen ("*Calculate"*) und die Vorhersage ("*Predict"*)*.* Und/oder:
- Die Funktion Berechnen ist die zentrale Optimierungsfunktion der vorliegenden Erfindung. Sie analysiert das verbrennungstechnische Betriebsverhalten der Gasturbine auf Basis aller in der internen Datenbank vorhandenen Betriebsdaten, vergleicht dieses mit in einer Datenbank hinterlegten Stabilitätskriterien und berechnet mit dem speziellen Al-Algorithmus die neuen, optimierten, regelbaren Betriebsparameter (Pilotgas und Abgastemperatur, auch als TOTC bezeichnet). Dieses Ergebnis kann von dem Betreiber dann in der Gasturbinenregelung vorzugsweise vollautomatisch umgesetzt werden. Und/oder:
- Mit der vorstehend genannten Funktion "Berechnen" ist es für den Anwender möglich, seine Gasturbine bei sich ändernden, nicht steuerbaren Randbedingungen jederzeit zu optimieren. Das können Schwankungen der Gasqualität oder des Gasdrucks sein, aber auch jahreszeitliche oder tägliche Unterschiede in der Umgebungsluft und im Luftdruck. Hierdurch wird es beim Betrieb einer Gasturbinenanlage ermöglicht, dass ein nicht optimaler IST-Wert (z.B. Pilotgas- und/oder berechneter Abgastemperaturwert) durch einen neuen, optimierten SOLL-Wert ersetzt wird.
Und/oder:
- Die vorstehend genannte Funktion Berechnen kann folgende Mermale aufweisen:
   ∘ Betriebliche Optimierung auf der Grundlage vorhandener Betriebsdaten durch den Einsatz künstlicher Intelligenz;
   ∘ Bestimmung der technischen Randbedingungen;
   ∘ Kontinuierliches Erlernen neuer Betriebsmerkmale, und/oder
   ∘ Betriebssicherheit durch vordefinierte Stabilitätskriterien und Grenzwerte.
Und/oder:
- Die vorstehend genannte Predict-Funktion bietet einen weiteren attraktiven Ansatz zur kontinuierlichen Betriebsoptimierung von Gasturbinen. Anstatt neue und optimierte Betriebsparameter zu ermitteln, geht diese Funktion den umgekehrten Weg. Das heißt, der Benutzer kann sowohl selbst gewählte, steuerbare Einstellungen (Steuergas und/oder berechnete Abgastemperatur) als auch nicht steuerbare Rahmenbedingungen vorgeben. Auf Grundlage dessen werden dann erfindungsgemäß mathematisch die Auswirkungen dieser (fiktiven) operativen Einstellungen auf das Betriebsverhalten mit Hilfe des speziellen Al-Algorithmus bestimmt und eine entsprechende Prognose für die Eintrittswahrscheinlichkeit geliefert. Diese *Predict-*Funktion eignet sich besonders für die Betriebsplanung, z.B. bei zu erwartenden Änderungen der Gasqualität, Gasdruckänderungen oder Wetteränderungen. Somit ist die Predict-Funktion daher ein ebenso wichtiger wie nützlicher Beitrag, um die Betriebssicherheit der Gasturbine auf dem höchstmöglichen Niveau zu halten. Und/oder:
- Erfindungsgemäß wird der Betriebszustand einer Gasturbine im laufenden Betrieb überwacht, wobei alle verfügbaren Daten lückenlos ausgewertet werden. Somit können geeignete Maßnahmen ergriffen und einzelne Parameter punktgenau optimiert werden, zur Realisierung einer höchstmöglichen Verfügbarkeit und/oder eines bestmöglichen Maschinenzustands bei gleichzeitiger Reduktion von Emissionen und geringeren Maschinenbetriebskosten. Und/oder:

- Die vorstehend genannte Funktion *Vorhersage* kann folgende Mermale aufweisen:
   ∘ Vorhersage von Betriebsszenarien mit Hilfe künstlicher Intelligenz;
   ∘ Optimale Möglichkeit zur eigenverantwortlichen Optimierung der Gasturbine;
   ∘ Kontinuierliches Erlernen neuer Betriebsmerkmale, und/oder
   ∘ Betriebssicherheit durch vordefinierte Stabilitätskriterien und Grenzwerte
Und/oder:
- Der technische Nutzen der vorliegenden Erfindung begründet sich u.a. durch folgende Aspekte:
   ∘ Auf maschinellem Lernen basierende Software zur Optimierung des Betriebs von Gasturbinen;
   ∘ Schnelles Lernen der KI durch kontinuierlichen und stetigen Datenfluss;
   ∘ Perfekte Nutzung aller historischen Betriebsdaten einer Gasturbine, bei der die vorliegende Erfindung zum Einsatz gelangt; und/oder
   ∘ Computeroptimierte Optimierung unter Berücksichtigung aller möglichen und auftretenden Randbedingungen.
- Erfindungsgemäß ist es möglich, die Optimierung des Betriebsverhaltens einer Gasturbinenanlage in unbegrenzter Anzahl durchzuführen. Dies bedeutet, dass eine erneute Optimierung einer Gasturbinenanlage erfindungsgemäß erneut durchgeführt werden kann, sobald sich externe Einflussfaktoren geändert haben, die eine Neueinstellung bzw. Optimierung der Gasturbinenanlage erforderlich machen. Anders ausgedrückt, sind dank der Erfindung eine unendliche Anzahl von Selbstoptimierungen durch den Betreiber bzw. vollautomatisch möglich. Hiermit ist auch der Vorteil verbunden, dass es erfindungsgemäß zu keinen kommerziellen Ausfallzeiten einer Gasturbinenanlage kommt, die ansonsten bei einem manuellen Tuning der Gasturbine durch Fachpersonal auftreten können. Und/oder:
- Mittels der vorliegenden Erfindung werden beim Betrieb einer Gasturbine vorzugsweise rund um die Uhr ("7/24", und 365 Tage im Jahr) alle verfügbaren Informationen (z.B. ständig wechselnde Umgebungstemperaturen, wechselnde Luftfeuchtigkeit, schwankende Gasqualität, wechselnder Luftdruck) analysiert und permanent mit den historischen und aktuellen Maschinendaten verglichen. Bei Bedarf wird die Einstellung spezifischer Parameter unterstützt, um den optimalen Maschinenzustand für eine Gasturbine im laufenden Betrieb zu erreichen, zu erhalten und weiter zu verbessern. Dies bezweckt eine maximale Verfügbarkeit, höchste Zuverlässigkeit und einen Betriebszustand, der die Gasturbine effizienter und mit möglichst geringen Emissionen arbeiten lässt. Und/oder:
- Bei der vorliegenden Erfindung nehmen die Maschinenreaktionen einer Gasturbine im Zuge einer Berechnung eines geänderten Betriebspunktes speziellen Einfluss, um auf Grundlage dessen und auch unter Berücksichtigung von klimatischen Bedingungen, die in der Umgebung einer solchen Gasturbinenanlage aktuell vorherrschen, eine Prognose für das resultierende Betriebsverhalten der Gasturbinenanlage zu erstellen. Dies erfolgt im Rahmen der vorstehend genannten "Predict"-Funktion. Und/oder:
- Erfindungsgemäß können zur Optimierung des Betriebsverhaltens einer Gasturbine nicht nur die genannten externen Einflussfaktoren berücksichtigt werden, sondern auch die historischen Daten, mit denen die Gasturbinenanlage, in der die Gasturbine integriert ist, in der Vergangenheit "gefahren" worden ist. Und/oder:
- Eine erfindungsgemäße Erstellung bzw. Berechnung einer Prognose in Bezug auf das resultierende geänderte bzw. optimierte Betriebsverhalten einer Gasturbinenanlage kann mit Hilfe einer Variation der Menge an "Pilot Gas" erfolgen. Bei dieser Ausführungsform der Erfindung ändert sich die Gesamt-Brennstoffmenge nicht, sondern wegen der geänderten Menge an "Pilot Gas" lediglich das Verhältnis zwischen eben diesem "Pilot Gas" und der Menge an Vormischgas. Und/oder:
- Gemäß einer alternativen Ausführungsform der Erfindung ist es auch möglich, die korrigierte Abgastemperatur ATK zu verändern bzw. zu regeln, indem die Menge an Vormischgas (und damit auch die Gesamt-Brennstoffmenge) gezielt verändert wird. Und/oder:
- Gemäß einer vorteilhaften Weiterbildung der Erfindung kann auch vorgesehen sein, dass die Temperatur des Gases, welches der Gasturbine in deren Betrieb zugeführt wird, und/oder der Druck dieses zugeführten Gases verändert und auf einen gewünschten Wert eingestellt wird. Konkret bedeutet dies, dass die Temperatur des zugeführten Gases erhöht oder vermindert werden kann, je nach Lastfall der mit diesem Gas gespeisten Gasturbine und deren Umgebungsbedingungen. Mutatis mutandis gilt dies auch für den Druck des zugeführten Gases. Jedenfalls ist im Zusammenhang mit einer solchen möglichen Veränderung bzw. Anpassung der Temperatur und/oder des Drucks des zugeführten Gases im Sinne der vorliegenden Erfindung zu verstehen, dass dies im Zusammenhang mit dem Schritt (iv) des vorstehend genannten erfindungsgemäßen computerimplementierten Verfahrens durchgeführt wird, weil nämlich die Temperatur und/oder der Druck des zugeführten Gases erfindungsgemäß ebenfalls zu den regelbaren Betriebsparameter zählen.
- Gemäß einer vorteilhaften Weiterbildung der Erfindung kann die Optimierung des Betriebsverhaltens einer Gasturbine in den verschiedenen Lastbereichen einer Gasturbinenanlage Anwendung finden, beispielsweise in den Bereichen nämlich untere Teillast, obere Teillast und/oder Grundlast. Und/oder:
- Bei der Simulation für einen gesuchten optimierten Betriebspunkt einer Gasturbinenanlage kann ein KI-basiertes maschinelles Lernen zum Einsatz kommen. Und/oder:
- Ein angepasster bzw. optimierter Betriebspunkt, der das Ergebnis einer insbesondere mittels eines KI-Systems bzw. eines hierzu vorgesehenen Optimierungs-algorithmus durchgeführten Simulation ist, wird für das Bedienpersonal einer Gasturbinenanlage geeignet angezeigt werden, beispielsweise auf dem Monitor einer Leitwarte oder dergleichen. Und/oder:
   - Ein angepasster bzw. optimierter Betriebspunkt, der das Ergebnis einer insbesondere mittels eines KI-Systems bzw. eines hierzu vorgesehenen Optimierungsalgorithmus durchgeführten Simulation ist, kann mit zumindest einer geeigneten Stellgröße in Form eines regelbaren Betriebsparameters dann automatisch und ohne "menschliches Zutun", d.h. ohne Beteiligung von Personal einer Leitwarte, signaltechnisch an die Steuerung der Gasturbinenanlage übertragen werden. Und/oder:
   - Für die vorliegende Erfindung ist charakteristisch, dass Maschinenreaktionsdaten der Gasturbinenanlage bzw. einer darin vorgesehenen Gasturbine im Zuge einer Berechnung eines geänderten Betriebspunktes speziellen Einfluss nehmen, um auf Grundlage dessen und auch unter Berücksichtigung von klimatischen Bedingungen, die in der Umgebung einer solchen Gasturbinenanlage aktuell vorherrschen und/oder ggf. zukünftig vorherrschen können, eine Prognose für das resultierende Betriebs-verhalten der Gasturbinenanlage zu erstellen. Dies wird dann bei der Simulation gemäß Schritt (iv) des vorstehend genannten erfindungsgemäßen Verfahrens geeignet berücksichtigt. In diesem Zusammenhang darf nochmals hervorgehoben werden, dass in Bezug auf die genannten Maschinenreaktionsdaten von zentraler Bedeutung ist, dass hierin auch die historischen Daten eingehen, mit denen die Gasturbinenanlage in der Vergangenheit betrieben bzw. "gefahren" worden ist. Und/oder:
   - Durch den Einsatz der vorliegenden Erfindung können sich beim Betrieb einer Gasturbinenanlage folgende Einsparpotentiale ergeben:
      - Standby-Vergütung (durch optimierte Verfügbarkeit der Maschine),
      - Optimierte Planungsoption für Stillstands Maßnahmen,
      - Optimierte Betriebsplanung,
      - Optimierte Potentialausschöpfung der Maschine, und/oder
      - Optimierte Schadstoff Emittierung (daraus ableitend, mögliche Bonuszahlungen).

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist nachfolgend anhand von bevorzugten Ausführungsformen in der Zeichnung schematisch dargestellt und wird unter Bezugnahme auf die Zeichnung ausführlich beschrieben. Es zeigen:
- Fig. 1: ein Blockdiagramm zur Veranschaulichung der operativen Prioritäten beim erfindungsgemäßen Betrieb einer Gasturbine,
- Fig. 2: ein Flussdiagramm zur Veranschaulichung eines erfindungsgemäßen Verfahrens zur Optimierung des Betriebsverhaltens einer Gasturbine,
- Fig. 3: ein Kreisdiagramm zur Veranschaulichung eines erfindungsgemäßen Verfahrens zur Optimierung des Betriebsverhaltens einer Gasturbine,
- Fig. 4: ein Diagramm zur Veranschaulichung von verschiedenen Einfluss-faktoren bei einer erfindungsgemäßen Optimierung des Betriebsverhaltens einer Gasturbine,
- Fig. 5: ein Diagramm zur Veranschaulichung einer erfindungsgemäßen Datenverarbeitung nach dem Ringspeicherprinzip,
- Fig. 6: ein Diagramm zur Veranschaulichung des Optimierungsgrads der Erfindung an bzw. auf einer Gasturbine als Funktion der Zeit im Vergleich zu herkömmlichen Tuning-Maßnahmen,
- Fig. 7: ein Diagramm zur Veranschaulichung von verschiedenen Einflussfaktoren und von Maschinenreaktionen einer Gasturbine hierauf als Funktion der Zeit,
- Fig. 8: ein Diagramm zur Veranschaulichung von verschiedenen Einflussfaktoren bei einer herkömmlichen Optimierung des Betriebsverhaltens einer Gasturbine nach dem Stand der Technik,
- Fig. 9: ein Diagramm zur Veranschaulichung der Auswirkung von herkömmlichen Tuning-Maßnahmen an bzw. auf einer Gasturbine nach dem Stand der Technik.

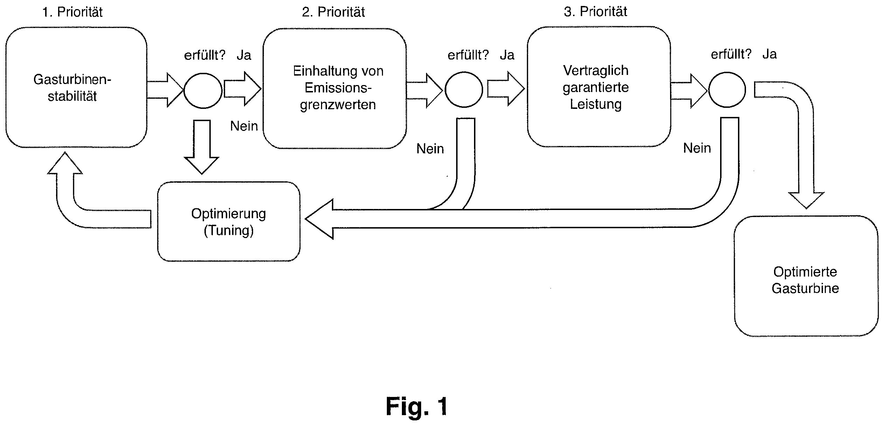

Nachstehend sind unter Bezugnahme auf die Fig. 1 bis 7 bevorzugte Ausführungsformen für ein erfindungsgemäßes Verfahrens und eines entsprechenden Systems 100 erläutert, um damit eine Optimierung des Betriebsverhaltens einer stationären Gasturbinenanlage 10 und einer darin integrierten Gasturbine 11 zu erreichen.

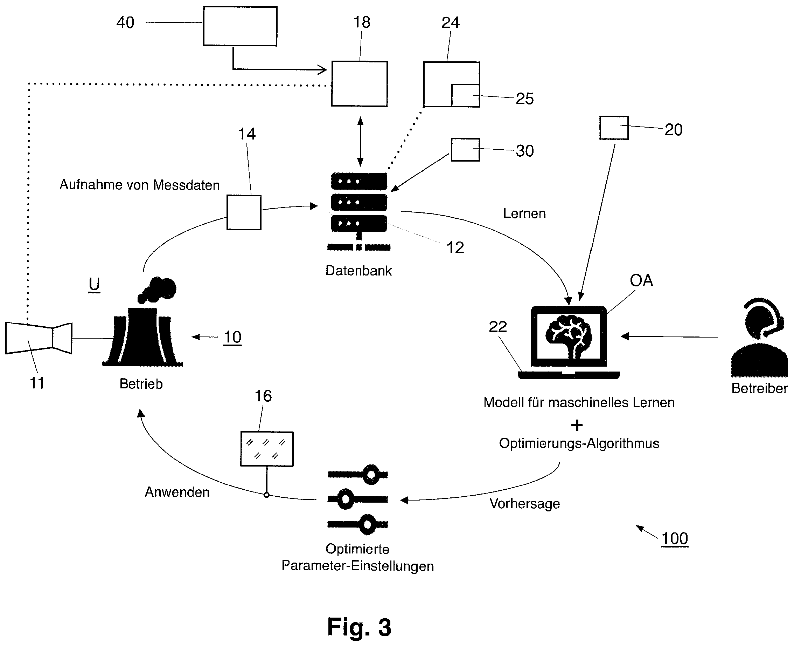

Die stationäre Gasturbinenanlage 10 und die darin integrierte Gasturbine 11 sind zwecks einer vereinfachten Darstellung in dem Diagramm von Fig. 3 nur symbolisch gezeigt.

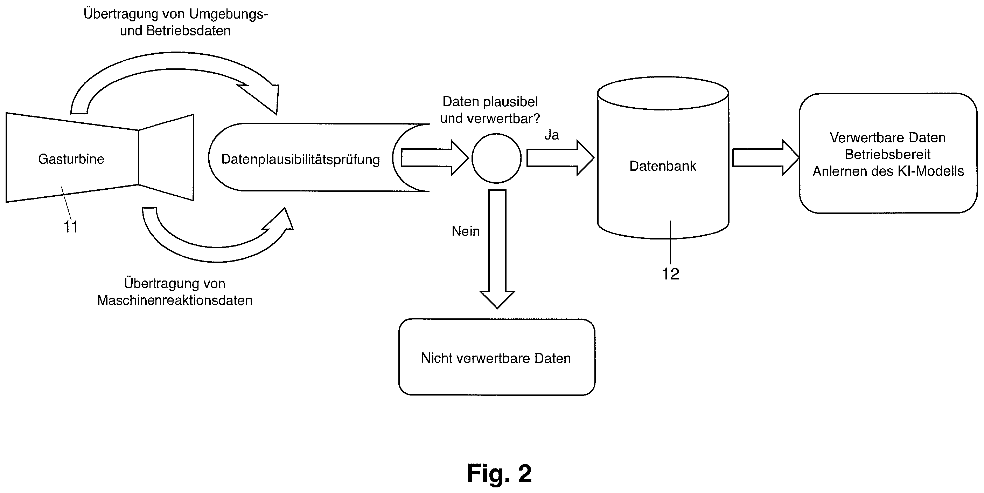

Die Betriebsdaten einer Gasturbine 11 werden auf eine lokale Datenbank 12 (vgl. Fig. 2, Fig. 3) innerhalb einer Workstation gespeichert. Auf dieser Datenbank 12 befinden sich alle verfügbaren Daten der Maschine bzw. der Gasturbine 11. Diese Daten können auch historische Daten einschließen, mit denen die Gasturbine 11 in der Vergangenheit betrieben bzw. "gefahren" worden ist.

Die historischen Daten der Gasturbine 11 können ergänzend oder alternativ auf einem externen Speicher 30 (vgl. Fig. 3) gespeichert sein. Dieser externe Speicher 30 ist signal- bzw. datentechnisch mit der Datenbank 12 verbunden. Entsprechend können die historischen Daten der Gasturbine 11 aus bzw. von dem externen Speicher 30 an die Datenbank 12 übertragen werden.

Bei Durchführung des erfindungsgemäßen computerimplementierten Verfahrens werden zu diesen historischen Daten der Gasturbine 11 dann deren aktuelle Betriebsdaten hinzugefügt. Somit ist die Datenbank 12 jederzeit auf dem neuesten Stand der Dateninformation, auf Grundlage dessen dann das erfindungsgemäße Verfahren durchgeführt wird.

Die Betriebsdaten der Gasturbine 11 sollten zweckmäßigerweise folgende Betriebsinformationen enthalten:
- Reguläre Standardbetriebsdaten (z.B. Leistung, Temperaturen, Drücke),
- Verbrennungsdaten (z.B. Frequenzen, Wechseldrücke, Beschleunigungen).

Die Datenbank 12 wird lokal auf einem Computer bzw. einer CPU-Einheit angelegt. Auf dieser CPU-Einheit befindet sich auch die erfindungsgemäße Softwarelösung. Die Software bezieht die benötigten Betriebsinformationen direkt aus der vorhandenen Datenbank 12. Somit ist sichergestellt, dass der Software jederzeit nicht nur alle historischen Daten, sondern auch die aktuellen Betriebsdaten für die Berechnung / Simulation zur Verfügung stehen.

Die Datenbank12 steht signaltechnisch bidirektional in Verbindung mit einer Steuereinrichtung 18, was in der Fig. 3 durch einen entsprechenden Doppelpfeil symbolisiert ist. Dies bedeutet, dass Daten aus der Datenbank 12 an die Steuereinrichtung 18 übertragen werden können, und umgekehrt auch von der Steuereinrichtung 18 an die Datenbank 12.

Die erfindungsgemäße Softwarelösung basiert auf dem Prinzip des KI-basierten maschinellen Lernens auf Basis der vorhandenen und dauernd aktualisierten Betriebsdaten der Gasturbine 11. In diesem Zusammenhang wird nochmals darauf hingewiesen, dass bei diesem maschinellen Lernen auch die historischen Daten der Gasturbine 11 Berücksichtigung finden können. Als "historische Daten" werden hierbei im Sinne der vorliegenden Erfindung jegliche Betriebsdaten der Gasturbine 11 verstanden, die an jedwedem Zeitpunkt in der Vergangenheit vorgelegen hatten, beispielsweise vor einem Jahr, vor einem Monat, vor einer Woche, vor einem Tag und/oder gar erst vor einer Stunde.

Für das erfindungsgemäße computerimplementierte Verfahren wird in Bezug auf dessen Schritt (iv) an dieser Stelle gesondert darauf hingewiesen, dass die hierin definierte Simulation unter Verwendung von Verfahren des maschinellen Lernens durchgeführt werden kann. Beispielhafte Techniken für ein solches maschinelles Lernen sind vorstehend bereits genannt worden, so dass zur Vermeidung von Wiederholungen hierauf rückverwiesen werden darf.

In Bezug auf den Schritt (iv) des erfindungsgemäßen computerimplementierten Verfahrens ist es zweckmäßig, wenn der zumindest eine regelbare Betriebsparameter der Gasturbine 11, der im Zuge der Simulation für einen optimierten Betriebspunkt der Gasturbine 11 mittels einer automatisierten Durchführung des Optimierungsalgorithmus OA (vgl. Fig. 3) verändert wird, ausgewählt ist aus der Gruppe umfassend eine Menge von zugeführtem Pilot Gas, eine Menge von zugeführtem Vormischgas, eine Temperatur des zugeführten Gases (Pilot Gas und/oder Vormischgas) und/oder einen Druck des zugeführten Gases (Pilot Gas und/oder Vorm ischgas).

Bei der Durchführung des erfindungsgemäßen computerimplementierten Verfahrens ist für dessen den Schritt (iv) von wesentlicher Bedeutung, dass hierbei zumindest eine vorbestimmte Bedingung in Bezug auf den Betrieb der Gasturbine 11 eingehalten wird. Zwingend ist die Einhaltung einer vorbestimmten Bedingung in Form der vorstehend genannten ersten Priorität (vgl. Fig. 1), wodurch die Stabilität der Gasturbinenanlage 10 gewährleistet ist.

Optional kann vorgesehen sein, dass neben der ersten Priorität auch zumindest noch eine weitere vorbestimmte Bedingung eingehalten wird, bei der es sich um die dritte Priorität und/oder um die zweite Priorität handeln kann.

Gemäß einer vorteilhaften Ausführungsform des erfindungsgemäßen computerimplementierten Verfahrens kann vorgesehen sein, dass das Verfahren des maschinellen Lernens zur Bestimmung oder Veränderung des zumindest einen regelbaren Betriebsparameter der Gasturbine 11 dient, der wie vorstehend erläutert ausgewählt sein kann aus der Gruppe umfassend eine Menge von zugeführtem Pilot Gas, eine Menge von zugeführtem Vormischgas, eine Temperatur des zugeführten Gases (Pilot Gas und/oder Vormischgas) und/oder einen Druck des zugeführten Gases (Pilot Gas und/oder Vormischgas).

Aufgrund der oben beschriebenen Einflussfaktoren ist jeder Betriebspunkt der Gasturbine 11 einzigartig und nicht wiederholbar.

Diesem Betriebspunkt wird eine "maschinen-spezifische Reaktion" der Gasturbine 11 zugeordnet. Diese sind in der Regel folgende:
- Brennkammerbeschleunigungen,
- Wechseldruckamplituden ("Humming" oder "Pulsation"),
- NOx und CO2 Emissionen.

Neben der Feststellung der "maschinen-spezifischen-Reaktion" durch die Software, wird auch die aktuelle Pilot Gas Menge ermittelt. Die Variation der Pilot Gas Menge stellt bei Durchführung des erfindungsgemäßen computerimplementierten Verfahrens eine erste mögliche Maßnahme zur (positiven) Einflussnahme auf das Betriebsverhalten der stationären Gasturbinenanlage 10 dar.

Der erfindungsgemäße Algorithmus der Software, in Form eines Optimierungsalgorithmus OA, der im Zusammenhang mit Fig. 3 noch weiter erläutert werden wird, bewertet nun diese Reaktionen der Maschine und erarbeitet einen Lösungsvorschlag (Simulation), welche Maßnahme (in der Regel eine Änderung des Pilot Gas) in der aktuellen Betriebssituation, die optimalen Einstellergebnisse erzielt.

Für die maximale Höhe des Brennkammerbeschleunigungsniveaus gibt es feste und definierte Grenzwerte.

Die Wechseldruckamplituden sind die Ursache für die Beschleunigungen und geben Auskunft darüber, wie betriebskritisch entsprechende Beschleunigungen zu bewerten sind.

Auch für die NOx bzw. CO2 Emissionen gibt es behördliche Grenzwerte, die einzuhalten sind.

Fig. 1 veranschaulicht ein Blockdiagramm zur Einhaltung von operativen Prioritäten beim Betrieb einer Gasturbine bzw. Gasturbinenanlage.

Um die zu ergreifenden Maßnahmen sinnvoll errechnen zu können und um den höchstmöglichen Benefit zu erzielen, kann der erfindungsgemäße Algorithmus (d.h. der Optimierungsalgorithmus OA, der im Schritt (iv) des erfindungsgemäßen computerimplementierten Verfahrens vorgesehen ist bzw. eingesetzt wird) gemäß folgender Priorisierung vorgehen:
Die höchste Priorität beim Betrieb einer Gasturbine, entsprechend in der Darstellung von Fig. 1 mit "1. Priorität" bezeichnet, liegt in der Gewährleistung einer Stabilität der Gasturbine. Dies bedeutet, dass beispielsweise die Zufuhr von Brennstoff zu der Gasturbine nur in einem solchen Maße erfolgt, dass die Gasturbine ein stabiles Betriebsverhalten über die Dauer der Zeit zeigt. Des Weiteren wird bei der 1. Priorität überprüft, ob das Beschleunigungsverhalten der Gasturbine unterhalb des Grenzwerts liegt und insoweit ein akzeptables Verhalten der Gasturbine gewährleistet ist.

Die nächstwichtige Priorität, in der Darstellung von Fig. 1 als "2. Priorität" bezeichnet, liegt in der Einhaltung von Emmissionsgrenzwerten. Diesbezüglich sind insbesondere die Emmission von Stickoxiden (NOx) gemeint, welches als Abgas beim Betrieb einer Gasturbine entsteht. Bei der zweiten Priorisierung wird auch geprüft, ob durch Anpassungen für das Pilot Gas (in der Regel Pilotgasabsenkung) die NOX Emissionen reduziert werden können. Diese (mögliche) Pilotgasreduzierung kann möglicherweise Auswirkungen auf die erste Priorisierung haben (steigende Beschleunigungen).

Die dann nächstwichtige Priorität, in der Darstellung von Fig. 1 mit "3. Priorität" bezeichnet, bezieht sich sodann auf eine vertraglich garantierte Leistung, die beim Betrieb einer Gasturbine erreicht wird. Zu dieser Leistung zählt insbesondere die Strommenge, welche mit einer Gasturbine erzeugt wird.

Das Blockdiagramm von Fig. 1 verdeutlicht, dass eine optimierte Gasturbine für den Fall vorliegt, wenn eine Überprüfung zu allen drei der genannten Prioritäten zu dem Ergebnis "ja" führt, d.h. eine Einhaltung aller dieser drei Prioritäten erfüllt ist. Falls dies nicht der Fall sein sollte, beispielsweise bei der 1. Priorität und/oder bei der 2. Priorität und/oder bei der 3. Priorität, wird eine nochmalige Optimierung (= Tuning) der Gasturbine vorgenommen und sodann eine nochmalige Abfrage bzw. Überprüfung der drei genannten Prioritäten vorgenommen.

Ergänzend wird in Bezug auf die Priorisierungen von Fig. 1 darauf hingewiesen, dass diese hier schematisch dargestellten Abfrageschleifen durch die Software zeitgleich (simultan) berechnet werden, um so die optimale Parametrierung für den jeweiligen Betriebspunkt zu ermitteln.

Im Zusammenhang mit der Fig. 1 wird darauf hingewiesen, dass bei dem erfindungsgemäßen computerimplementierten Verfahren gemäß dessen Schritt (iv) die darin definierte vorbestimmte Bedingung durch die vorstehend genannte erste Priorität gebildet ist, mit der wie erläutert eine Stabilität der Gasturbine während ihres Betriebs gewährleistet wird.

Bei der Durchführung des erfindungsgemäßen computerimplementierten Verfahrens kann in Bezug auf dessen Schritt (iv) vorgesehen sein, dass neben der ersten Priorität zumindest noch eine weitere Bedingung eingehalten wird, bei der es sich um die vorstehend genannte dritte Priorität (zur Einhaltung einer vertraglich garantierten Leistung, beispielsweise die beim Betrieb einer Gasturbine erzeugte Strommenge) handeln kann. Für diesen Fall bedeutet dies, dass dann bei Durchführung des erfindungsgemäßen Verfahrens zwei vorbestimmte Bedingungen eingehalten werden, nämlich in Form der vorstehend genannten ersten Priorität und der dritten Priorität (vgl. Fig. 1).

Gemäß einer weiteren Möglichkeit zur Durchführung des erfindungsgemäßen computerimplementierten Verfahrens kann in Bezug auf dessen Schritt (iv) auch vorgesehen sein, dass es sich bei der vorbestimmten Bedingung um die vorstehend genannte zweite Priorität handelt, mit der die Einhaltung von Emissionsgrenzwerte im Betrieb der Gasturbine gewährleistet wird.

Bei Durchführung des erfindungsgemäßen computerimplementierten Verfahrens ist es in Bezug auf dessen Schritt (iv) möglich, dass hierbei ingesamt drei vorbestimmte Bedingungen einhalten werden, wobei es sich bei diesen Bedingungen um die vorstehend genannte erste Priorität, die zweite Priorität und die dritte Priorität (vgl. Fig. 1) handelt.

Fig. 2 zeigt ein Flussdiagramm, mit dem Aspekte eines erfindungsgemäßen Verfahrens zur Optimierung des Betriebsverhaltens einer Gasturbine und die Funktionsweise einer Auswerteeinheit 14 (vgl. Fig. 3) veranschaulicht werden. Während des Betriebs der Gasturbine 11 werden verschiedene Daten der Umgebung U (vgl. Fig. 3) der Gasturbinenanlage 10 und der hierin integrierten Gasturbine 11 erfasst bzw. aufgenommen, beispielsweise die relative Luftfeuchtigkeit, Luftdruck und Temperatur, d.h. die Lufttemperatur eines Raums, in dem die Gasturbine 11 installiert ist. Des Weiteren werden Betriebsdaten der Gasturbine 11 aufgenommen bzw. erfasst, zu denen die Menge an zugeführtem Brennstoff (z.B. sogenanntes Pilotgas), der Lastbereich der Gasturbine und/oder auch eine Qualität des zugeführten Gases bzw. Brennstoffs gehören. Alle diese Umgebungs- und Betriebsdaten werden von der Gasturbine 11 an die hiermit in Signalverbindung stehende Auswerteeinheit 14 übertragen, mit der dann eine Datenplausibilitätsprüfung erfolgt.

In gleicher Weise werden von der Gasturbine 11 Maschinenreaktionsdaten an die hiermit in Signalverbindung stehende Auswerteeinheit 14 übertragen, wobei dann diese übertragenen Maschinenreaktionsdaten ebenfalls der Datenplausibilitätsprüfung unterzogen werden.

Als Ergebnis der vorstehend genannten Datenplausibilitätsprüfung ergibt sich die Aussage, ob die überprüften Daten plausibel und verwertbar sind. Bejahendenfalls werden dann diese Daten in der Datenbank 12 (vgl. Fig. 2, Fig. 3) abgespeichert. Andernfalls, d.h. falls die Daten nicht plausibel und verwertbar sein sollten, werden diese Daten dann als "nicht verwertbare Daten" klassifiziert und entsprechend nicht weiter berücksichtigt und ggf. gelöscht.

Auf Grundlage der in der Datenbank 12 gespeicherten Daten, welche im Zuge der genannten Datenplausibilitätsprüfung als plausibel und verwertbar beurteilt worden sind, kann anschließend ein Modell für künstliche Intelligenz (nachstehend als "KI-Modell" bezeichnet) angelernt werden, um erfindungsgemäß das Betriebsverhalten der Gasturbine 11 zu optimieren.

Fig. 3 veranschaulicht ein Kreisdiagramm des erfindungsgemäßen computerimplementierten Verfahrens zur Optimierung des Betriebsverhaltens einer Gasturbine 11. Das Diagramm von Fig. 3 stellt quasi einen Lernkreis dar, d.h. einen geschlossenen Kreislauf, der zu einem stetig zunehmenden Kenntnisstand bzw. Wissen über alle möglichen Einsatzszenarien einer Gasturbine führt.

In der Darstellung von Fig. 3 ist im Bereich links oben der Schritt "Aufnahme von Messdaten" genannt. Dies bedeutet, dass wie bereits im Zusammenhang mit der Fig. 2 erläutert, verschiedene Umgebungs- und Betriebsdaten der 11 Gasturbine erfasst bzw. aufgenommen werden und anschließend, sofern diese Daten als plausibel und verwertbar eingestuft werden, anschließend in der Datenbank 12 gespeichert werden.

Zwischen der Gasturbinenanlage 10 (und der darin integrierten Gasturbine 11) und der Datenbank 12 ist signaltechnisch die Auswerteeinheit 14 angeordnet bzw. geschaltet. Dies bedeutet, dass die aktuellen Betriebsdaten der Gasturbine zunächst an die Auswerteeinheit 14 übermittelt und dort eine Plausibilitätsprüfung durchlaufen, wie vorstehend bereits anhand des Diagramms von Fig. 2 erläutert. Im Anschluss an diese Plausibiltätsprüfung werden dann nur solche Daten bzw. Datensätze der Gasturbine 11 - erfindungsgemäß im Sinne einer Teilmenge bezeichnet - in der Datenbank gespeichert, die als plausibel und verwertbar eingestuft worden sind.

In Bezug auf die Fig. 3 darf an dieser Stelle weiter angemerkt werden, dass hierin mit jeweils punktierten Linien signaltechnische Verbindungen gezeigt sind. Konkret besteht bei Fig. 3 eine solche signaltechnische Verbindung zwischen der Gasturbine 11 und der zugeordneten Steuereinrichtung 18, und in gleicher Weise zwischen der Verarbeitungseinheit 24 (des Computerprogrammprodukts) und der Datenbank 12.

Beispielsweise ist es mittels der signaltechnischen Verbindung zwischen der Gasturbine 11 und der zugeordneten Steuereinrichtung 18 möglich, dass Betriebsdaten der Gasturbine 11 in Echtzeit (sog. "real time data") an die Steuereinrichtung 18 übertragen bzw. gesendet werden.

In Bezug auf die Daten, welche in der Datenbank 12 abgespeichert sind, darf an dieser Stelle hervorgehoben werden, dass es sich bei diesen Daten ausschließlich um jene handelt, welche im Zuge der Datenplausibilitätsprüfung mittels der Auswerteeinheit 14 als plausibel und verwertbar eingestuft worden sind. Somit werden ausschließlich diese Daten für ein anschließendes maschinelles Erlernen und zur Durchführung eines Optimierungs-Algorithmus verwendet, der bei Durchführung des erfindungsgemäßen computerimplementierten Verfahrens in dessen Schritt (iv) vorgesehen ist. Ein solcher Optimierungs-Algorithmus ist in dem Diagramm von Fig. 3 mit "OA" bezeichnet.

Wie soeben erläutert, werden ausschließlich die in der Datenbank 12 gespeicherten Daten, welche als plausibel und verwertbar eingestuft worden sind, für ein anschließendes maschinelles Lernen und somit für das erfindungsgemäße KI-Modell verwendet. Beim Einsatz des Modells des maschinellen Lernens und bei der Durchführung des Optimierungsalgorithmus OA ist es für einen Benutzer möglich, die gewünschten Randbedingungen für die Gasturbine und die zugehörigen Optimierungsziele zu definieren.

Sodann wird erfindungsgemäß der Optimierungsalgorithmus OA (vgl. Fig. 3) gestartet, um eine Optimierung von Betriebsparametern der Gasturbine 11 (beispielsweise die Menge an Pilotgas oder die Abgastemperatur TOTC) auf dem Modell des maschinellen Lernens bzw. mit dem KI-Modell durchzuführen und infolgedessen dann die entsprechenden Maschinenreaktionen vorherzusagen. Dies bedeutet, dass auf Grundlage eines solchen maschinellen Lernens und mit der Durchführung des Optimierungsalgorithmus OA nach einem Betriebspunkt für die Gasturbine 11 gesucht wird, welcher mit höchster Wahrscheinlichkeit zumindest eine vorbestimmte Bedingung (d.h. zumindest die erste Priorität, zur Einhaltung der Stabilitätskriterien) und ggf. auf weitere vorbestimmte Bedingungen (z.B. in Form der zweiten Priorität, zur Einhaltung von vorgegebenen Grenzwerten, und/oder in Form der dritten Priorität, zur Einhaltung von gewünschten bzw. vereinbarten Leistungen, insbesondere der erzeugten Strommenge) erfüllt. Wie an anderer Stelle bereits erläutert, kann erfindungsgemäß vorgesehen sein, dass alle drei der genannten Bedingungen (d.h. die erste, zweite und dritte Priorität) erfüllt werden, wobei dann u.a. der NOx-Wert der Gasturbine 11 minimiert wird.

Wenn in der verfügbaren Datenbank 12 kein Datenpunkt vorhanden ist, welcher alle der gewünschten bzw. geforderten Bedingungen erfüllt, so wird von dem KI-Modell nur nach Parametereinstellungen gesucht, die alle geforderten Bedingungen erfüllen. Hierbei wird dann nicht weiter nach einer Minimierung der NOx-Werte gesucht. Das Ergebnis einer solchen Optimierung ist dann der nächste vorgeschlagene Arbeitspunkt für den optimierten Betrieb einer Gasturbine.

In Bezug auf das Symbol "Optimierte Parameter-Einstellungen", welches in der Fig. 3 gezeigt ist, ist es erfindungsgemäß auch möglich, eine Visualisierung der berechneten Ergebnisse anzuzeigen sowie eine Meldung auszugeben, wenn alle geforderten Stabilitätskriterien erfüllt sind. Eine solche Visualisierung kann über eine Anzeigeeinrichtung 16 erfolgen. Im Anschluss hieran kann dann eine Entscheidung getroffen werden, ob ein solcher Arbeitspunkt für den Betrieb der Gasturbine 11 verwendet werden soll. Für diesen Fall wird sodann dieser Arbeitspunkt ebenfalls in der Datenbank 12 abgespeichert, so dass das Modell des maschinellen Lernens bzw. das KI-Modell für zukünftige Optimierungen hiervon lernen kann.

Sofern mittels des Optimierungsalgorithmus OA im Zuge des Schritts (iv) des erfindungsgemäßen computerimplementierten Verfahrens ein optimierter Arbeitspunkt für den Betrieb der Gasturbine 11 (mit zumindest einem geänderten regelbaren Betriebsparameter der Gasturbine 11), kann bei weiterer Durchführung des erfindungsgemäßen computerimplementierten Verfahrens vorgesehen sein, dass der gemäß Schritt (iv) bestimmte, veränderte zumindest eine regelbare Betriebsparameter der Gasturbine 11 an die Steuereinrichtung 18 übermittelt wird, um den weiteren Betrieb der Gasturbine 11 automatisiert unter Verwendung dieses veränderten zumindest einen regelbaren Betriebsparameters durchzuführen.

Die vorliegende Erfindung betrifft auch ein Computerprogrammprodukt, das auf einem computerlesbaren Medium 20 gespeichert ist und Instruktionen umfasst, die, wenn sie von einem Computer 22 ausgeführt werden, ein erfindungsgemäßes computerimplementiertes Verfahren wie vorstehend erläutert ausführen, wobei das Verfahren eine technische Wirkung in Form eines optimierten Betriebsverhaltens der stationären Gasturbinenanlage 10 bewirkt .In dem Diagramm von Fig. 3 sind das computerlesbaren Medium 20 und der Computer 22 zwecks einer vereinfachten Darstellung lediglich symbolisch gezeigt.

Die vorliegende Erfindung betrifft neben einem computerimplementierten Verfahren zur Optimierung des Betriebsverhaltens einer Gasturbinenanlage in gleicher Weise auch ein solches computerimplementiertes System für den gleichen Zweck. Ein solches System ist in der Fig. 3 symbolisch mit "100" bezeichnet, und umfasst neben den bereits genannten Komponenten von Fig. 3 auch eine Verarbeitungseinheit 24, die programmtechnisch eingerichtet ist zur Ausführung des erfindungsgemäßen computerimplementierten Verfahrens, und auch einen Speicher 25, der Instruktionen enthält, welche die Verarbeitungseinheit 24 veranlassen, das erfindungsgemäße Verfahren auszuführen.

In Bezug auf die einleitend genannten beiden Hauptfunktionen der Erfindung, nämlich das Berechnen ("*Calculate*") und die Vorhersage ("*Predict*")*,* sei an dieser Stelle darauf hingewiesen, dass diese Hauptfunktionen auf dem gleichen Computer 22 (vgl. Fig. 3) eingerichtet und ausgeführt werden können, auf dem auch der Optimierungsalgorithmus OA läuft.

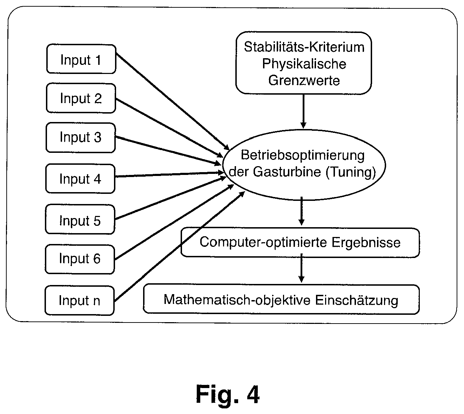

Fig. 4 zeigt ein Diagramm zur Veranschaulichung von verschiedenen Einflussfaktoren, die bei einer erfindungsgemäßen Optimierung des Betriebsverhaltens einer Gasturbine und somit für die Durchführung des erfindungsgemäßen computerimplementierten Verfahrens von Bedeutung sind. Die Einflussfaktoren werden in dem Diagramm von Fig. 4 jeweils als "Input" bezeichnet. Bei diesen Einflussfaktoren kann es sich um Signale handeln, die den erfassten Umgebungsdaten und/oder Betriebsdaten einer zu optimierenden Gasturbine entsprechen. In dem Diagramm kommt durch den Eintrag "Input n" zum Ausdruck, dass erfindungsgemäß auch mehr als nur die gezeigten sechs Input-Einflussfaktoren zur Betriebsoptimierung einer Gasturbine berücksichtigt bzw. verarbeitet werden können.

In dem Diagramm von Fig. 4 kommt des Weiteren zum Ausdruck, dass die erfindungsgemäße Betriebsoptimierung einer Gasturbine (= Tuning) von den erforderlichen Stabilitäts-Kriterien und den hiermit in Verbindung stehenden physikalischen Grenzwerten abhängig ist.

Die erfindungsgemäße Betriebsoptimierung führt dann zu computer-optimierten Ergebnissen, und infolgedessen zu einer mathematisch-objektiven Einschätzung, ob diese Ergebnisse dann zu einem neuen optimierten Betriebspunkt für die Gasturbine führen können. Diese computer-optimierten Ergebnisse werden von dem vorstehend genannten Modell für maschinelles Lernen (= "KI-Modell") bestimmt und mittels einer Durchführung des Optimierungs-Algorithmus erzielt.

An dieser Stelle wird nochmals gesondert hervorgehoben, dass es sich bei den Daten, welche in der Datenbank 12 abgespeichert sind und die anschließend für das KI-Modell in Form des Optimierungsalgorithmus OA berücksichtigt werden, auch um sogenannte historische Daten handeln kann, d.h. um Daten, mit welchen die Gasturbine 11 in der Vergangenheit betrieben bzw. "gefahren" worden ist. Auf Grundlage dessen ist erfindungsgemäß ein "Selbstlern-Effekt" für die Optimierung der Gasturbine 11 möglich. Für diesen Fall wird an dieser Stelle gesondert darauf hingewiesen, dass dann im Schritt (iv) des vorstehend genannten erfindungsgemäßen computerimplementierten Verfahrens bei der Simulation für einen optimierten Betriebspunkt der Gasturbine 11 sowohl aktuelle Betriebs- und Umgebungsdaten der Gasturbine 11 als auch deren historische Betriebsdaten berücksichtigt und geeignet mittels des Optimierungsalgorithmus OA datentechnisch verarbeitet werden, um damit zumindest einen regelbaren Betriebsparameter der Gasturbine 11 zu verändern, wobei wie erläutert zumindest eine vorbestimmte Bedingung in Bezug auf den Betrieb der Gasturbine 11 eingehalten wird.

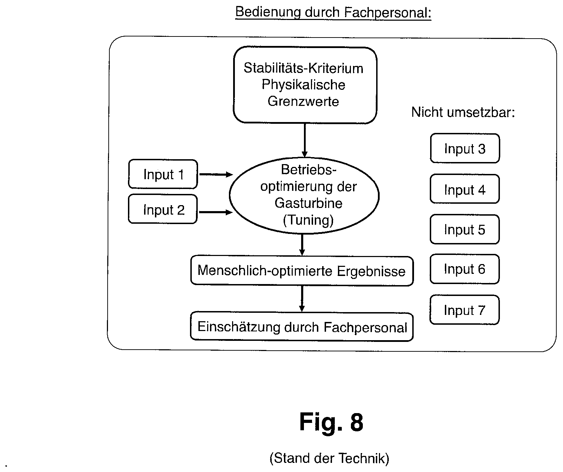

In Bezug auf die Vielzahl von Einflussfaktoren, welche gemäß der Darstellung von Fig. 4 (vgl. "Input n") im Zuge der Durchführung des erfindungsgemäßen computerimplementierten Verfahrens für die Betriebsoptimierung einer Gasturbine (= Tuning) berücksichtigt werden, wird nochmals hervorgehoben, dass es erfindungsgemäß durch den Einsatz eines KI-Modells möglich ist, alle dieser Einflussfaktoren zu berücksichtigen und entsprechend für die gewünschte Optimierung des Betriebsverhaltens einer Gasturbine zu verarbeiten. Im Unterschied hierzu ist dies bei der Optimierung des Betriebsverhaltens einer Gasturbine durch Fachpersonal nicht möglich, weil dann nämlich ein Mensch in der Regel nicht mehr als zwei Einflussgrößen gleichzeitig im Blick halten kann. Dies kommt durch das Diagramm von Fig. 8 zum Ausdruck.

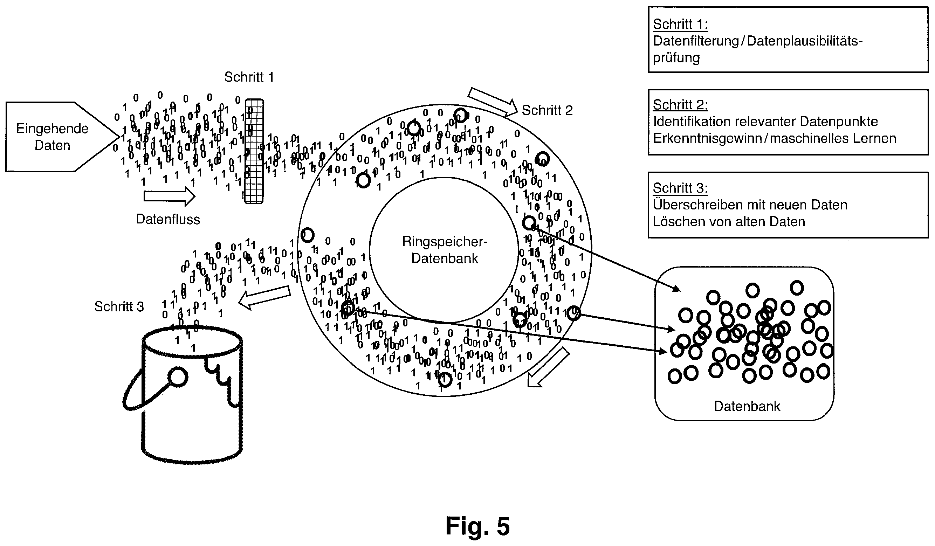

Fig. 5 zeigt ein Diagramm, mit dem im Zuge der Durchführung des erfindungsgemäßen computerimplementierten Verfahrens eine erfindungsgemäße Daten-verarbeitung nach dem Ringspeicherprinzip veranschaulicht wird. Hierbei wird in einem Schritt 1 eine Datenfilterung bzw. Datenplausibilitätsprüfung vorgenommen. Diese Datenplausibilitätsprüfung entspricht jener von Fig. 2, so dass zur Vermeidung von Wiederholungen auf die Erläuterungen zur Fig. 2 verwiesen werden darf. Im Anschluss an den Schritt 1 werden dann wie erläutert zunächst alle Daten bzw. Datensätze, welche als plausibel und verwertbar eingestuft bzw. bewertet worden sind, in der Datenbank 12 abgespeichert.

Im Zuge der Datenverarbeitung gemäß Fig. 5 werden dann in einem Schritt 2 relevante Datenpunkte identifiziert, um hieraus einen Erkenntnisgewinn für das anschließende maschinelle Lernen bzw. für das KI-Modell zu erreichen. Diese neuen Datenpunkte können sich auf Grundlage von gewünschten Randbedingungen und Optimierungszielen ergeben, die von dem Benutzer bzw. Betreiber einer Gasturbine definiert werden.

Im Schritt 3 gemäß der Datenverarbeitung von Fig. 5 werden dann die bereits vorhandenen Daten ggf. mit den neu generierten Daten überschrieben, wobei dann auch alte Daten, die nicht weiter benötigt werden, gelöscht werden können.

In Bezug auf die Datenverarbeitung gemäß Fig. 5 bilden die Schritte 2 und 3 einen Kreisprozess bzw. Kreislauf, mit dem eine permanente Datenoptimierung und eine selbstlernende Optimierung bzw. Generierung von neuen relevanten Datenpunkten mittels des KI-Modells durchgeführt wird. Hierbei kann die Menge an Daten, welche in der Ringspeicherdatenbank gespeichert sind, dadurch auf ein handhabbares Maß reduziert werden, indem entweder bereits vorhandene Daten mit neu generierten Daten überschrieben werden und/oder alte Daten, die nicht weiter benötigt werden, gelöscht werden.

Im Zuge einer gemeinsamen Betrachtung der Diagramme von Fig. 2 und Fig. 5 wird hervorgehoben, dass die Ringspeicherdatenbank von Fig. 5 zumindest ein Teil der Datenbank von Fig. 2 sein kann. Dies bedeutet, dass damit zumindest ein Teil der Datenbank von Fig. 2 gemäß der Datenverarbeitung von Fig. 5 einer permanenten Veränderung unterliegt, nämlich nach dem Prinzip eines maschinellen Lernens und einem hierdurch erzielten permanenten Erkenntnisgewinn, was mittels des KI-Modells erreicht wird.

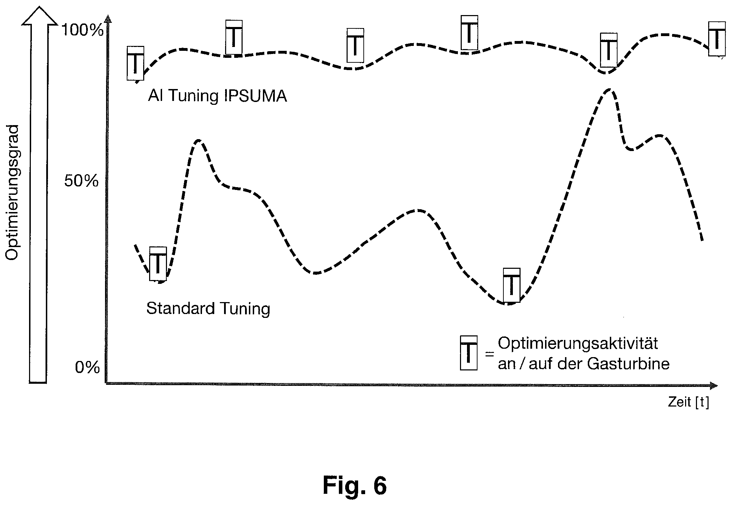

Fig. 6 veranschaulich schematisch vereinfacht den Optimierungsgrad, der erfindungsgemäß bei der Optimierung an bzw. auf einer Gasturbine als Funktion der Zeit erreicht wird, im Vergleich zu herkömmlichen Tuning-Maßgaben. Aus dem Diagramm von Fig. 6 ist ersichtlich, dass das erfindungsgemäße Tuning mittels eines KI-Modells (auch als "IPSUMA" bezeichnet) im Verlauf der Zeit sowohl auf einem höheren Optimierungsgrad liegt und auch weniger Schwankungen unterworfen ist, als im Vergleich zu herkömmlichen Standard-Tuning-Maßnahmen.

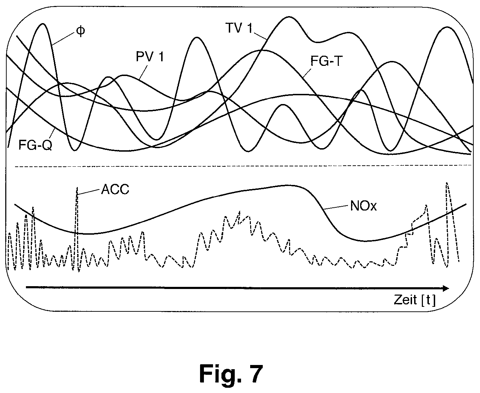

Fig. 7 veranschaulicht ein Diagramm von verschiedenen Einflussfaktoren und von Maschinenreaktionen einer Gasturbine hierauf. Im Einzelnen haben die in der Fig. 7 verwendeten Abkürzungen folgende Bedeutung:
- - Φ:: Relative Luftfeuchtigkeit der Umgebung, in der eine Gasturbine installiert ist;
- - PV 1:: Verdichter-Eintrittsdruck (d.h. der Luftdruck der Umgebung, der vor dem Verdichter der Gasturbine bzw. am Eingang des Verdichters vorliegt);
- - TV1:: Temperatur vor dem Verdichter einer Gasturbine;
- - FG-T:: Temperatur des Brennstoffs (= *"Fuel Gas"*), der einer Gasturbine zugeführt wird;
- - FG-Q:: Qualität eines Brennstoffs (= *"Fuel Gas"*), der einer Gasturbine zugeführt wird;
- - ACC:: Beschleunigung der Brennkammer einer Gasturbine. Dies kann in Form einer Erschütterung oder in Form eines "Ruckelns" der Gasturbine während ihres Betriebs auftreten;
- - NOx:: Stickoxid-Emissionen, die beim Betrieb einer Gasturbine entstehen.

Schließlich wird für die Funktionsweise der vorliegenden Erfindung darauf hingewiesen, dass gemäß weiterer möglicher Ausführungsformen des erfindungsgemäßen computerimplementierten Verfahrens und eines entsprechenden Systems 100 vorgesehen sein kann, dass auch die zukünftigen Bedingungen der Umgebung U (vgl. Fig. 3), in der die Gasturbinenanlage 10 mit der darin integrierten Gasturbine 11 angeordnet ist, gemäß aktueller Wettervorhersagen berücksichtigt werden. Diesbezüglich sei darauf hingewiesen, dass Wettervorhersagen inzwischen für einen Zeithorizont von einigen Tagen (beispielsweise für die nächsten 1-2 Tage, ggf. auch für die nächsten 3-5 Tage) recht zuverlässige Prognosen in Bezug auf klimatische Veränderungen geben können. Insoweit kann erfindungsgemäß bei einer Berücksichtigung solcher Wettervorhersagen in Bezug auf den geografischen Ort, an dem sich die Gasturbinenanlage 10 konkret befindet, der Vorteil erreicht werden, dass klimatische Änderungen der Umgebungsbedingungen (z.B. Änderungen der Luft-temperatur, des Luftdrucks, der Luftfeuchtigkeit) der stationären Gasturbinenanlage 10 für eine Optimierung von deren Betriebsverhalten berücksichtigt werden, zumindest für einen kurzfristigen Zeithorizont von einigen Stunden oder gar für einige Tage.

Im Zusammenhang mit der vorstehend genannten Möglichkeit, dass auch zukünftigen Bedingungen der Umgebung U gemäß aktueller Wettervorhersagen berücksichtigt werden können, ist zu deren Realisierung gemäß einer vorteilhaften Weiterbildung der Erfindung vorgesehen, dass die Steuereinrichtung 18 (vgl. Fig. 3) mit mindestens einer Prognoseeinrichtung 40 signaltechnisch verbunden ist. Von dieser Prognoseeinrichtung 40 wird mindestens eine Prognosevariable bereitgestellt und an die Steuereinrichtung 18 gesendet bzw. übertragen. Hierbei ist die Steuereinrichtung 18 dazu angepasst, die Gesamtleistungsabgabe der Gasturbine 11 und/oder deren optimierten Betriebspunkt mindestens teilweise basierend auf der mindestens einen von der Prognoseeinrichtung 40 bereitgestellten Prognosevariablen zu steuern, wobei die mindestens eine Prognosevariable ausgewählt ist aus der Gruppe umfassend: eine Wettervorhersage, eine Sturmwarnung, Windgeschwindigkeit, Luftdichte, Strahlungsstärke, atmosphärischer Turbulenz, Regenbedingung, Schneebedingung, Lufttemperatur und/oder Feuchtigkeit.

Auf Grundlage der soeben genannten signaltechnischen Verbindung der Steuereinrichtung 18 mit der Prognoseeinrichtung 40 ist es somit bei der Durchführung der vorliegenden Erfindung möglich, dass bei der Simulation gemäß Schritt (iv) auch mindestens eine Prognosevariable erhalten wird. Entsprechend kann diese Simulation für einen gesuchten optimierten Betriebspunkt einer Gasturbinenanlage auch in Abhängigkeit von mindestens einer von der Prognoseeinrichtung 40 bereitgestellten Prognosevariablen durchgeführt werden, um damit eine Gesamtleistungsabgabe der Gasturbine 11 und/oder deren optimierten Betriebspunkt geeignet zu steuern. Dies bedeutet konkret, dass im Schritt (iv) des erfindungsgemäßen Verfahrens der Optimierungsalgorithmus OA (vgl. Fig. 3) auch unter Berücksichtigung von mindestens einer Prognosevariablen durchgeführt wird.

Schließlich sei in Bezug auf die vorliegende Erfindung hervorgehoben, dass hiermit nicht "der" optimale Betriebspunkt für eine Gasturbinenanlage berechnet werden soll. Stattdessen geht es erfindungsgemäß darum, dass ein Betriebspunkt simuliert bzw. bestimmt (z.B. berechnet) werden soll, mit dem zuallererst die Sicherheit der Gasturbinenanlage gewährleistet wird und sodann auch vorbestimmte "Fenster" eingehalten werden, die in Bezug auf die gesetzlich erlaubten Emissionen der Anlage (vorstehend bei der Erläuterung von Fig. 1 als "2. Priorität" bezeichnet) und/oder gewünschte Leistungsdaten (*"performance",* vorstehend bei der Erläuterung von Fig. 1 als "3. Priorität" bezeichnet) gegeben sind.

### Bezugszeichenliste

- 10: stationäre Gasturbinenanlage
- 11: Gasturbine
- 12: Datenbank
- 14: Auswerteeinheit
- 16: Anzeigeeinrichtung
- 18: Steuereinrichtung
- 20: computerlesbares Medium
- 22: Computer
- 24: Verarbeitungseinheit
- 25: Speicher (der Verarbeitungseinheit 24)
- 30: externer Speicher
- 40: Prognoseeinrichtung
- 100: computerimplementiertes System
- OA: Optimierungsalgorithmus
- U: Umgebung (der stationären Gasturbinenanlage 10 bzw. der Gasturbine 11)

## Patentansprüche

1. Computerimplementiertes Verfahren zur Optimierung des Betriebsverhaltens einer stationären Gasturbinenanlage (10), wobei dieses Verfahren folgende Schritte aufweist:
(i) Aufnehmen von Betriebsdaten einer Gasturbine (11), währenddessen die Gasturbine (11) sich im Betrieb befindet, und Erfassen von Umgebungsdaten aus einer Umgebung (U), in der die Gasturbine (11) angeordnet ist,
(ii) Speicherung von zumindest einer Teilmenge der Betriebs- und Umgebungsdaten, die in Schritt (i) aufgenommen bzw. erfasst worden sind, in einer Datenbank (14),
(iii) Bereitstellung von historischen Betriebsdaten der Gasturbine (11), die in der Datenbank (14) gespeichert sind und/oder aus einem externen Speicher (30) ausgelesen werden, wobei diese historischen Betriebsdaten jedwede früheren Betriebszustände der Gasturbine (11) repräsentieren, und
(iv) Simulation für einen optimierten Betriebspunkt der Gasturbine (11) mittels einer automatisierten Durchführung eines Optimierungsalgorithmus (OA) unter Berücksichtigung der in Schritt (ii) gespeicherten Betriebs- und Umgebungsdaten der Gasturbine (11) und deren historischen Betriebsdaten von Schritt (iii), wobei zumindest ein regelbarer Betriebsparameter der Gasturbine (11) verändert wird, derart, dass dabei zumindest eine vorbestimmte Bedingung in Bezug auf den Betrieb der Gasturbine (11) eingehalten wird.

2. Verfahren nach Anspruch 1, **dadurch gekennzeichnet, dass** der zumindest eine Betriebsparameter der Gasturbine (11) ausgewählt ist aus der Gruppe umfassend eine Menge von zugeführtem Pilot Gas, eine Menge von zugeführtem Vormischgas, eine Temperatur des zugeführten Gases (Pilot Gas und/oder Vormischgas) und/oder einen Druck des zugeführten Gases (Pilot Gas und/oder Vormischgas).

3. Verfahren nach Anspruch 1 oder 2, **dadurch gekennzeichnet, dass** die vorbestimmte Bedingung gemäß Schritt (iv) durch eine erste Priorität gebildet ist, mit der eine Stabilität der Gasturbine (11) während ihres Betriebs gewährleistet wird.

4. Verfahren nach Anspruch 3, **dadurch gekennzeichnet, dass** eine vorbestimmte Bedingung gemäß Schritt (iv) durch eine zweite Priorität, mit der die Einhaltung von Emissionsgrenzwerte im Betrieb der Gasturbine (11) gewährleistet wird, und/oder durch eine dritte Priorität, mit der eine gewünschte Leistung der Gasturbine (11) während ihres Betriebs gewährleistet wird, gebildet wird.

5. Verfahren nach einem der vorhergehenden Ansprüche, **dadurch gekennzeichnet, dass** die in Schritt (i) aufgenommenen und erfassten Betriebs- und Umgebungsdaten vor der Speicherung in der Datenbank (14) gemäß Schritt (ii) zunächst an eine mit der Gasturbine (11) in Signalverbindung stehende Auswerteeinheit (14) übertragen werden, in der eine Plausibilitätsprüfung dieser Daten durchgeführt wird, wobei im Rahmen von Schritt (ii) dann nur solche Datensätze in der Datenbank (14) gespeichert werden, die als plausibel und verwertbar eingestuft worden sind.

6. Verfahren nach einem der vorhergehenden Ansprüche, **dadurch gekennzeichnet, dass** die Betriebsdaten der Gasturbine (11) reguläre Standardbetriebsdaten insbesondere in Form von Leistung, Temperaturen und Drücke, als auch Verbrennungsdaten insbesondere in Form von Frequenzen, Wechseldrücke und Beschleunigungen enthalten.

7. Verfahren nach einem der vorhergehenden Ansprüche, **dadurch gekennzeichnet, dass** bei der Simulation gemäß Schritt (iv) für einen optimierten Betriebspunkt der Gasturbine (11) auch deren maschinen-spezifische Reaktionen berücksichtigt werden, zu denen Folgende gehören:
• Brennkammerbeschleunigungen,
• Wechseldruckamplituden ("Humming" oder "Pulsation"), und/oder
• NOx und CO2 Emissionen.

8. Verfahren nach einem der vorhergehenden Ansprüche, **dadurch gekennzeichnet, dass** bei der Simulation gemäß Schritt (iv) eine Funktion "Berechnen" durchgeführt wird, mit der das verbrennungstechnische Betriebsverhalten der Gasturbine (11) auf Basis aller in der Datenbank (14) vorhandenen Betriebsdaten analysiert wird und sodann dieses Betriebsverhalten der Gasturbine (11) mit in der Datenbank (14) hinterlegten Stabilitätskriterien verglichen wird, wobei anschließend mittels des Optimierungsalgorithmus (OA) ein optimierter Wert für den zumindest einen regelbaren Betriebsparameter bestimmt wird, vorzugweise, dass die Funktion "Berechnen" folgende Merkmale aufweist:
• Betriebliche Optimierung der Gasturbine (11) auf der Grundlage vorhandener Betriebsdaten durch den Einsatz künstlicher Intelligenz;
• Bestimmung der technischen Randbedingungen;
• Kontinuierliches Erlernen neuer Betriebsmerkmale, und/oder
• Betriebssicherheit durch vordefinierte Stabilitätskriterien und Grenzwerte.

9. Verfahren nach einem der vorhergehenden Ansprüche, **dadurch gekennzeichnet, dass** bei der Simulation gemäß Schritt (iv) eine Funktion "Vorhersage" durchgeführt wird, bei der zumindest ein steuerbarer Betriebsparameter als fiktive Maschineneinstellung und zumindest eine nicht-steuerbare Rahmenbedingung der Gasturbine (11), vorzugsweise eine Mehrzahl von solchen Rahmenbedingungen vorgegeben sind, wobei auf Grundlage dessen dann mathematisch die Auswirkungen dieser (fiktiven) operativen Maschinenstellung auf das Betriebsverhalten mit Hilfe des Optimierungsalgorithmus (OA) bestimmt und eine entsprechende Prognose für deren Eintrittswahrscheinlichkeit erstellt wird, vorzugweise, dass die Funktion "Vorhersage" bei zu erwartenden Änderungen der Gasqualität, Gasdruckänderungen oder Wetteränderungen angewendet bzw. durchgeführt wird.

10. Verfahren nach einem der vorhergehenden Ansprüche, **dadurch gekennzeichnet, dass** der veränderte zumindest eine regelbare Betriebsparameter der Gasturbine (11), mit dem gemäß Schritt (iv) der optimierte Betriebspunkt der Gasturbine (11) simuliert worden ist, auf einer Anzeigeeinrichtung (16) angezeigt wird.

11. Verfahren nach einem der vorhergehenden Ansprüche, **dadurch gekennzeichnet, dass** der gemäß Schritt (iv) bestimmte, veränderte zumindest eine regelbare Betriebsparameter der Gasturbine (11) an eine Steuereinrichtung (18) übermittelt wird, um den weiteren Betrieb der Gasturbine (11) automatisiert unter Verwendung dieses veränderten zumindest einen regelbaren Betriebsparameters durchzuführen.

12. Verfahren nach einem der vorhergehenden Ansprüche, **dadurch gekennzeichnet, dass** die Simulation gemäß Schritt (iv) unter Verwendung von Verfahren des maschinellen Lernens durchgeführt wird, vorzugsweise, dass das Verfahren des maschinellen Lernens eine Technik umfasst, die ausgewählt ist aus der Gruppe bestehend aus künstlichen neuronalen Netzen, Entscheidungsbäumen, regelbasierten Lernsystemen, selbstlernenden Algorithmen, statistischen Modellen oder adaptiven Modellen, weiter vorzugsweise, dass das Verfahren des maschinellen Lernens zur Bestimmung oder Veränderung des zumindest einen regelbaren Betriebsparameter der Gasturbine (11) gemäß der Gruppe von Anspruch 2 dient.

13. Verfahren nach einem der vorhergehenden Ansprüche, **dadurch gekennzeichnet, dass** bei der Simulation gemäß Schritt (iv) mindestens eine Prognosevariable erhalten wird und damit der Optimierungsalgorithmus (OA) auch unter Berücksichtigung der mindestens einen Prognosevariablen durchgeführt wird, wobei die mindestens eine Prognosevariable ausgewählt ist aus der Gruppe umfassend: eine Wettervorhersage, eine Sturmwarnung, Windgeschwindigkeit, Luftdichte, Strahlungsstärke, atmosphärischer Turbulenz, Regenbedingung, Schneebedingung, Lufttemperatur und/oder Feuchtigkeit.

14. Computerprogrammprodukt, das auf einem computerlesbaren Medium (20) gespeichert ist und Instruktionen umfasst, die, wenn sie von einem Computer (22) ausgeführt werden, ein Verfahren nach einem der Ansprüche 1 bis 13 ausführen, wobei das Verfahren eine technische Wirkung in Form eines optimierten Betriebsverhaltens der stationären Gasturbinenanlage (10) bewirkt .

15. Computerimplementiertes System (100) zur Optimierung des Betriebsverhaltens einer stationären Gasturbinenanlage (10), umfassend:
eine Verarbeitungseinheit (24), die programmtechnisch eingerichtet ist zur Ausführung eines Verfahrens nach einem der Ansprüche 1 bis 13, und
einen Speicher (25), der Instruktionen enthält, welche die Verarbeitungseinheit (24) veranlassen, das Verfahren nach einem der Ansprüche 1 bis 13 auszuführen.
